# EUROPEAN PATENT APPLICATION

(11) **EP 4 611 140 A1**
(43) Date of publication of application: **03.09.2025**
(21) Application number: 23882265.4
(22) Date of filing: 08.09.2023
(51) Int. Cl.: H01M 50/213, H01M 50/107, H01M 50/119, H01M 50/342, H01M 50/35, H01M 50/503

(54) **BATTERY PACK**

(30) Priority: 26.10.2022 JP 2022171772
(71) Applicant: Panasonic Energy Co., Ltd., Moriguchi-shi, Osaka 570-8511 (JP)
(72) Inventor: YOSHIKAWA, Kenta, Kadoma-shi, Osaka 571-0057 (JP)
(74) Representative: Eisenführ Speiser
(86) International application number: PCT/JP2023/032786
(87) International publication number: WO 2024/090052

(57) **Abstract**

The present disclosure provides a battery pack that can reduce adverse effects on an adjacent secondary battery cell. A battery pack 100 includes a plurality of secondary battery cells 1, each of which has a gas discharge port 1a on an end face, a battery holder 20 that holds the plurality of secondary battery cells 1, one or more lead plates 30 that couple end faces of adjacent secondary battery cells 1 among the plurality of secondary battery cells 1, and a baffle plate 40 having a plurality of protrusions and depressions that generate a pressure difference in gas discharged from the secondary battery cells 1. The plurality of protrusions and depressions are provided between the end faces of the adjacent secondary battery cells 1 by being disposed on at least one of a face of the battery holder 20 opposite the lead plate 30 and a face of the lead plate 30 opposite the battery holder 20.

## Description

### TECHNICAL FIELD

The present disclosure relates to a battery pack.

### BACKGROUND ART

A battery pack containing a plurality of secondary battery cells stored in an outer case has been used to drive an electrical device by a rechargeable secondary battery, such as a lithium-ion secondary battery (e.g., Patent Literature 1). The perspective view in FIG. 9 shows an example of a battery pack in which a plurality of secondary battery cells in cylindrical outer cans are connected in series or in parallel to achieve high output and capacity. In this battery pack, the end faces of the cylindrical outer cans are aligned in the same plane, and a flat lead plate 930 is welded over these end faces of the outer cans of the respective secondary battery cells.

In such a battery pack, each secondary battery cell has a gas discharge port in its outer can to allow high-temperature and high-pressure gas to be discharged from the outer can in the event that some malfunction occurs and the inside of the outer can is highly pressurized. For example, for a secondary battery cell with a cylindrical outer can, a gas discharge port is provided on an end face of the cylindrical outer can. For such a battery pack containing secondary battery cells, if high-temperature and high-pressure gas is ejected from the gas discharge port of one of the secondary battery cells, it is necessary to prevent adverse effects of the high-temperature and high-pressure gas on other normal secondary battery cells, for example, by quickly diffusing the gas or discharging the gas to the outside of the outer case.

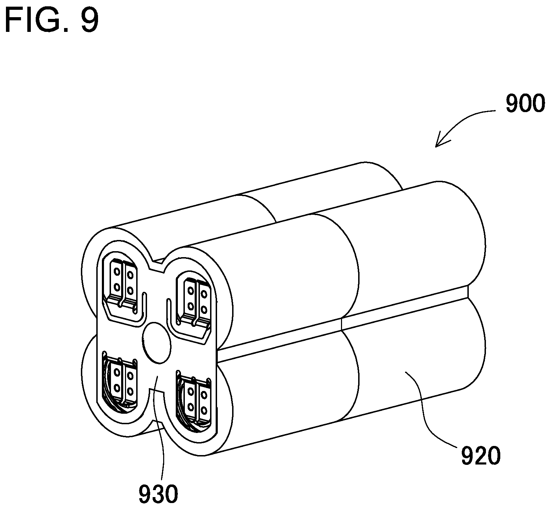

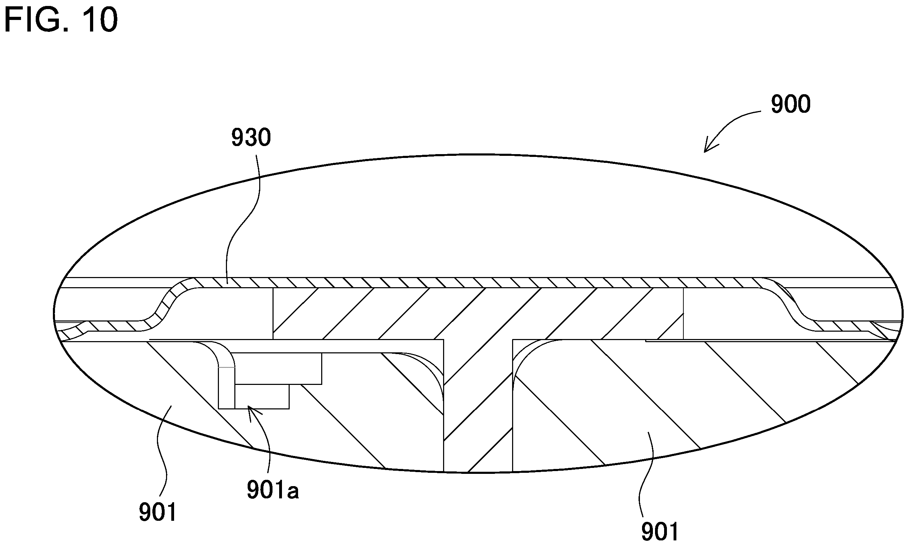

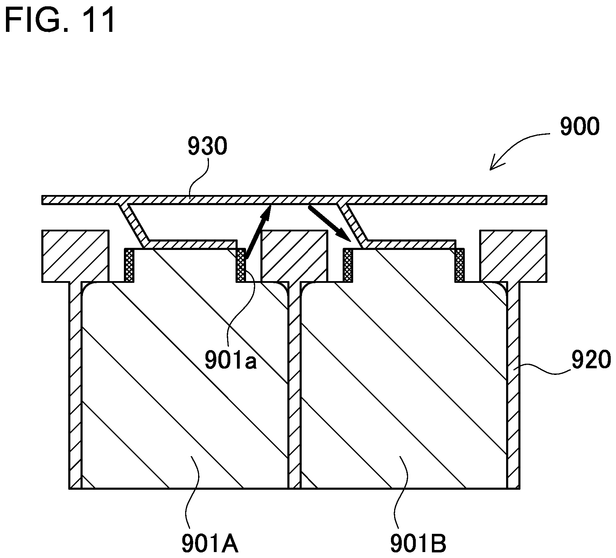

However, in a battery pack 900 in which the end faces of adjacent secondary battery cells are coupled to each other via a lead plate 930, which is shown in the perspective view in FIG. 9, the lead plate 930 is welded over the end faces of the secondary battery cells 901 as shown in the cross-sectional view in FIG. 10. In this state, the gas discharge port opened on the end face of the outer can is covered by the lead plate 930. It has been found through tests conducted by the present inventor that, if high-temperature and high-pressure gas is unexpectedly discharged from the gas discharge port of one of the secondary battery cells 901 in this state, as shown in the cross-sectional view in FIG. 11, the high-temperature and high-pressure gas discharged from the secondary battery cell 901A may be reflected upon hitting the back side of the lead plate 930 and may possibly impinge on an end face of the adjacent secondary battery cell 901B. This condition in which the end face of the normal secondary battery cell 901B is exposed to the high-temperature and high-pressure gas is considered abnormal, posing a risk of the abnormal secondary battery cell further propagating to other cells.

### CITATION LIST

### PATENT LITERATURE

Patent Literature 1: Japanese Unexamined Patent Application Publication No. 2021-174673

### SUMMARY OF INVENTION

### TECHNICAL PROBLEM

One of the objects of the present disclosure is to provide a battery pack capable of reducing adverse effects on adjacent secondary battery cells even when high-temperature and high-pressure gas is discharged from a secondary battery cell.

### SOLUTION TO PROBLEM

A battery pack according to one embodiment of the present invention includes a plurality of secondary battery cells, each of which has a gas discharge port on an end face, a battery holder that holds the plurality of secondary battery cells, and one or more lead plates that couple end faces of adjacent secondary battery cells among the plurality of secondary battery cells. The battery pack further includes a baffle plate having a plurality of protrusions and depressions that generate a pressure difference in gas discharged from the secondary battery cells. The plurality of protrusions and depressions are provided between the end faces of the adjacent secondary battery cells by being disposed on at least one of a face of the battery holder opposite the lead plate and a face of the lead plate opposite the battery holder.

### ADVANTAGEOUS EFFECTS OF INVENTION

According to the battery pack of one embodiment of the present invention, even if high-temperature and high-pressure gas is unexpectedly discharged from the gas discharge port of one of the secondary battery cells, it is possible to reduce the pressure of the gas by a plurality of baffle plates, thereby preventing or suppressing the event that the gas reflected by the lead plate coupling end faces of adjacent secondary battery cells propagates to the end face of the adjacent secondary battery cell and causes heating of this secondary battery cell. This contributes to improved safety.

### BRIEF DESCRIPTION OF DRAWINGS

FIG. 1 is a perspective view of a battery pack according to Embodiment 1 of the present invention;
FIG. 2 is an exploded perspective view of the battery pack of FIG. 1;
FIG. 3 is a perspective view of the battery module of FIG. 2;
FIG. 4 is a perspective view of the battery module of FIG. 3, viewed from the back;
FIG. 5 is an exploded perspective view of the battery module of FIG. 3 with the lead plate detached;
FIG. 6 is an exploded perspective view of the battery module of FIG. 4 with the lead plate detached;
FIG. 7 is an exploded perspective view of the battery module of FIG. 5 with the battery holder detached;
FIG. 8 is a cross-sectional view of the battery module of FIG. 3 taken along the line VIII-VIII in FIG. 3;
FIG. 9 is a perspective view of a battery pack according to a comparative example;
FIG. 10 is a schematic cross-sectional view showing a portion having a gas discharge port of the battery pack of FIG. 9;
FIG. 11 is a schematic cross-sectional view of the battery pack of FIG. 9 in a state in which gas is reflected by a lead plate when the gas is discharged from one of the secondary battery cells;
FIG. 12 is an enlarged perspective view of the portion enclosed by the dashed line in the battery module of FIG. 8;
FIG. 13 is an enlarged perspective view of the baffle plate of FIG. 12;
FIG. 14 is an enlarged perspective view showing a flow of high-pressure gas in the baffle plate of FIG. 13;
FIG. 15A is a side view of the battery holder of FIG. 5, FIG. 15B is an enlarged cross-sectional view of the framed portion in FIG. 15A, FIG. 15C is an enlarged cross-sectional view of a battery pack according to Embodiment 2, FIG. 15D is an enlarged cross-sectional view of a battery pack according to Embodiment 3, FIG. 15E is an enlarged cross-sectional view of a battery pack according to Embodiment 4, and FIG. 15F is an enlarged cross-sectional view of a battery pack according to Embodiment 5;
FIG. 16 is an enlarged schematic cross-sectional view of a main part of a battery pack according to Embodiment 6;
FIG. 17 is an enlarged schematic cross-sectional view of a main part of a battery pack according to Embodiment 7; and
FIG. 18 is an enlarged schematic cross-sectional view of a main part of a battery pack according to Embodiment 8.

### DESCRIPTION OF EMBODIMENTS

The embodiments of the present invention may be specified by the following configurations and features.

The battery pack according to another embodiment of the present invention is provided such that, in addition to the embodiment described above, the plurality of baffle plates are provided in parallel to each other, and a gas retention space is formed in a depression of the protrusions and depressions. With this configuration, the following effect can be expected: the high-temperature and high-pressure gas discharged from the gas discharge port stays in the gas retention spaces formed between adjacent baffle plates, and, each time the gas moves forward beyond the baffle plates, a pressure loss is generated, which reduces the mass flow rate of the gas by the time the gas reaches the adjacent secondary battery cell, thereby reducing the risk of thermal propagation.

The battery pack according to another embodiment of the present invention is provided such that, in addition to any one of the embodiments described above, the plurality of baffle plates are secured onto a base plate and the end face of each baffle plate is separated from the rear side of the lead plate to form a gap. The gap is made narrower than the height of the baffle plate. With this configuration, the high-temperature and high-pressure gas discharged from the gas discharge port passes through the narrow gap to thereby generate a pressure loss; further, the gas repeatedly moves up and down as it passes through the gap, descends into a gas retention space, then passes through an adjacent gap, and descends into an adjacent gas retention space. In this manner, the gas moves forward while generating a pressure loss, thereby the mass flow rate of the gas can be decreased with the movement of the gas.

Further, the battery pack according to another embodiment of the present invention is provided such that, in addition to any one of the embodiments described above, the lead plate includes a pair of joint pieces that joins to each end face of the adjacent secondary battery cells, and a flat portion having the pair of joint pieces on both sides. The pair of joint pieces on both sides of the flat portion is bent, thus separating the main face of the flat portion from the face where the pair of joint pieces are provided. As a result, a first space is formed on the back side of the flat portion. The plurality of baffle plates are disposed in this first space. With this configuration, the gas reflected by the back of the flat portion of the lead plate in the first space is guided into the gas retention space between the baffle plates and propagates by passing beyond the plurality of gas retention spaces, thereby reducing the gas pressure and mass flow rate. As a result, direct exposure of the high-temperature and high-pressure gas to the adjacent secondary battery cell can be prevented or suppressed to enhance safety.

Furthermore, according to the battery pack of still another embodiment of the present invention, in addition to any one of the embodiments described above, the lead plate has one or more ridges on a rear side, and each ridge is interposed in a depression of the baffle plate. With this configuration, it is expected that the gas discharge path has a zigzag form by the presence of the baffle plate and the ridge, and the effect of decreasing the pressure with the movement of the gas is enhanced.

Furthermore, according to the battery pack of still another embodiment of the present invention, in addition to any one of the embodiments described above, the lead plate couples secondary battery cells aligned along a first direction, and the baffle plate extends along a second direction that intersects the first direction. With this configuration, when the high-temperature and high-pressure gas discharged from the gas discharge port of one of secondary battery cells is directed to an end face of the adjacent secondary battery cell, the movement of the gas is inhibited by the baffle plate oriented to intersect the moving direction of the gas, thereby capable of efficiently exerting a pressure reduction effect.

Furthermore, the battery pack of yet another embodiment of the present invention includes, in addition to any one of the embodiments described above, a battery holder that holds the plurality of secondary battery cells, and the plurality of baffle plates are formed in the battery holder.

Furthermore, according to the battery pack of yet another embodiment of the present invention, in addition to any one of the embodiments described above, each of the secondary battery cells has a cylindrical outer can.

Embodiments of the present invention are described below with reference to the drawings. However, the embodiments shown below are only examples to illustrate the technical concepts of the present invention, and the present invention is not limited to these embodiments. Further, any member in the claims in this specification is not limited to the members described in these embodiments. In particular, unless otherwise specified, the dimensions, materials, shapes, relative positions, etc. of the components described in these embodiments are intended to be illustrative and not to limit the scope of the present invention. It should be noted that the sizes, positional relationships, etc. of the members shown in the drawings may be exaggerated for clarity in the description. Furthermore, in the following description, the same names and reference numerals indicate the same or similar members, and detailed descriptions may be omitted as appropriate. Furthermore, each element constituting the present invention may be implemented such that a plurality of elements are formed from the same member, allowing a single member to serve as a plurality of elements, or that, conversely, the function of a single member is shared among a plurality of members.

The battery pack of the present invention can be used, for example, in self-propelled robots for home delivery, electric carts for home delivery and golf courses, electric scooters, construction machinery, and as a power source for driving vehicles such as hybrid and electric vehicles. In addition, the battery pack of the present invention can be used as a power source for driving electric assist bicycles and for portable electrical devices such as radios, electric cleaners, and power tools. Alternatively, for stationary energy storage applications, the battery pack of the present invention can also be used as a backup power source for servers, as well as a power supply for households, business establishments, and factories. A battery pack used as a power source for driving a self-propelled robot is described below as one embodiment of the present invention.

### [Embodiment 1]

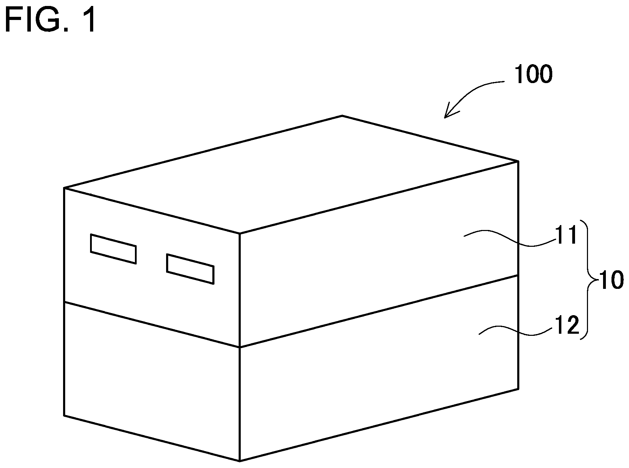

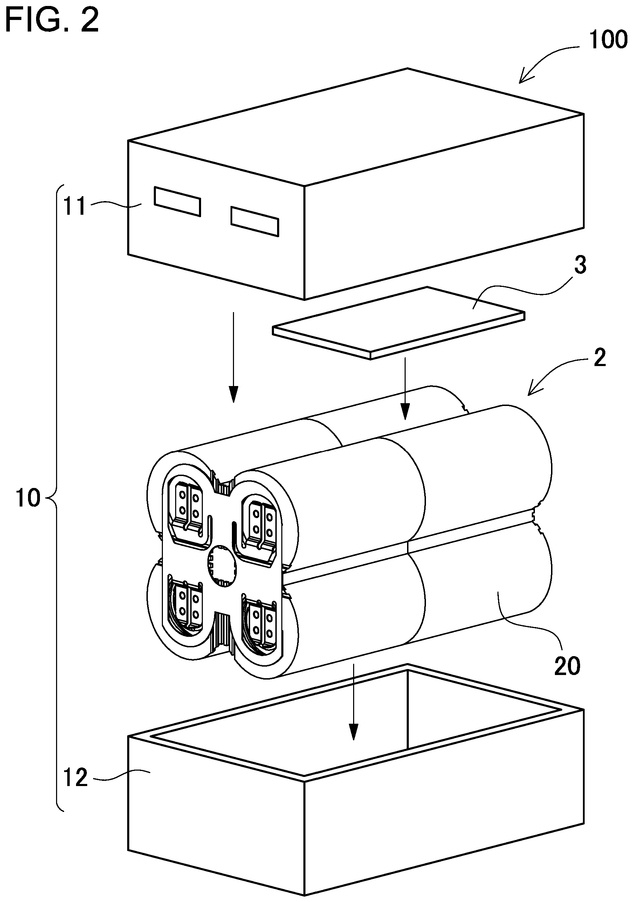

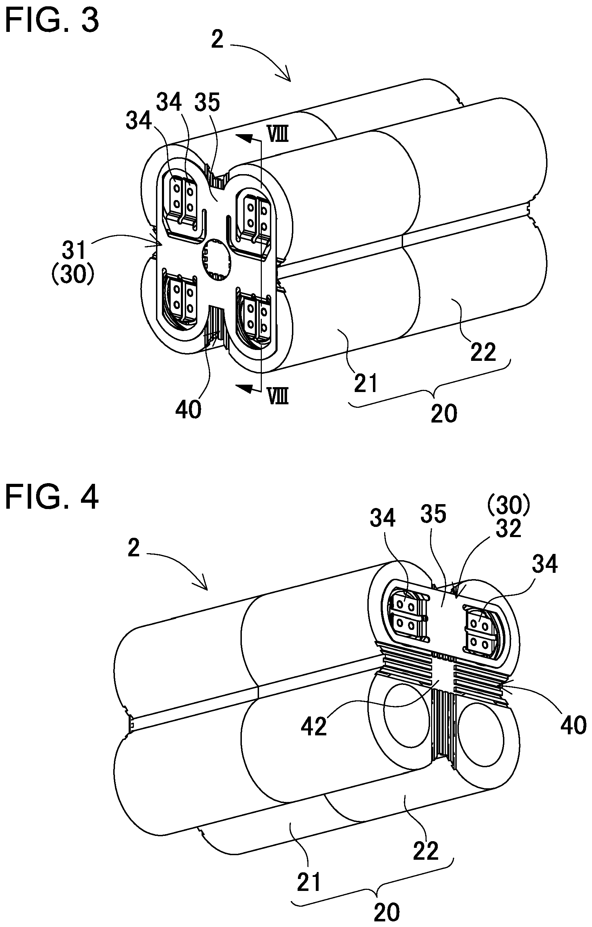

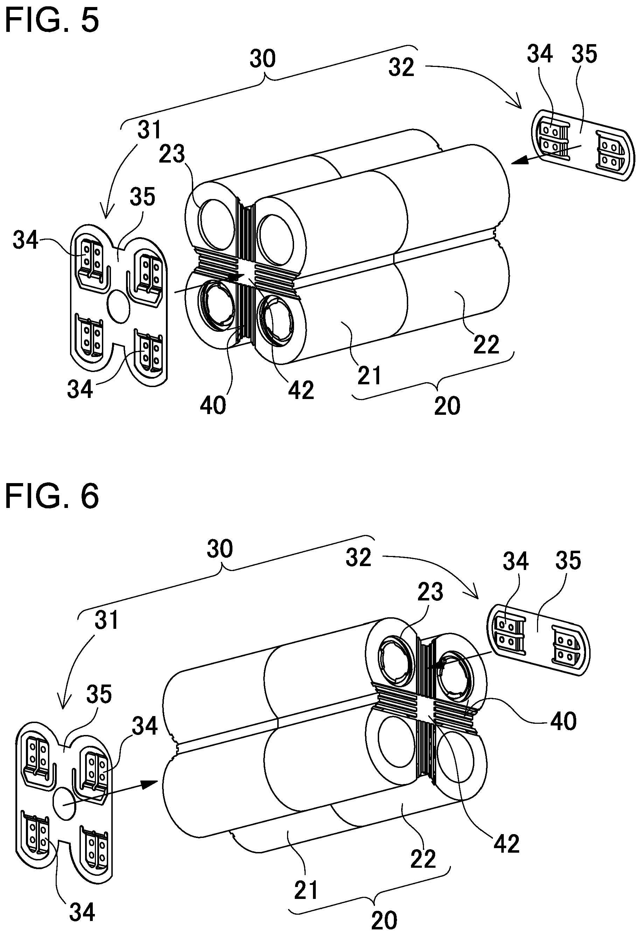

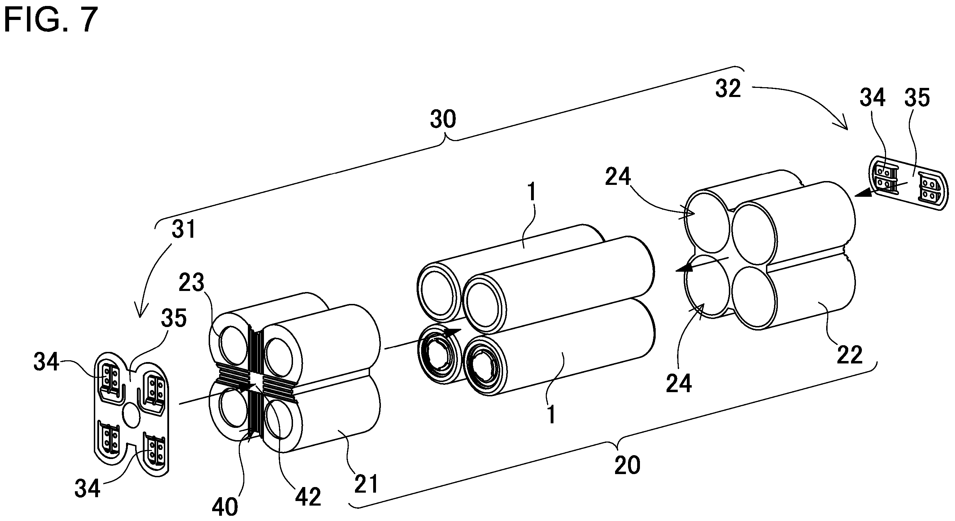

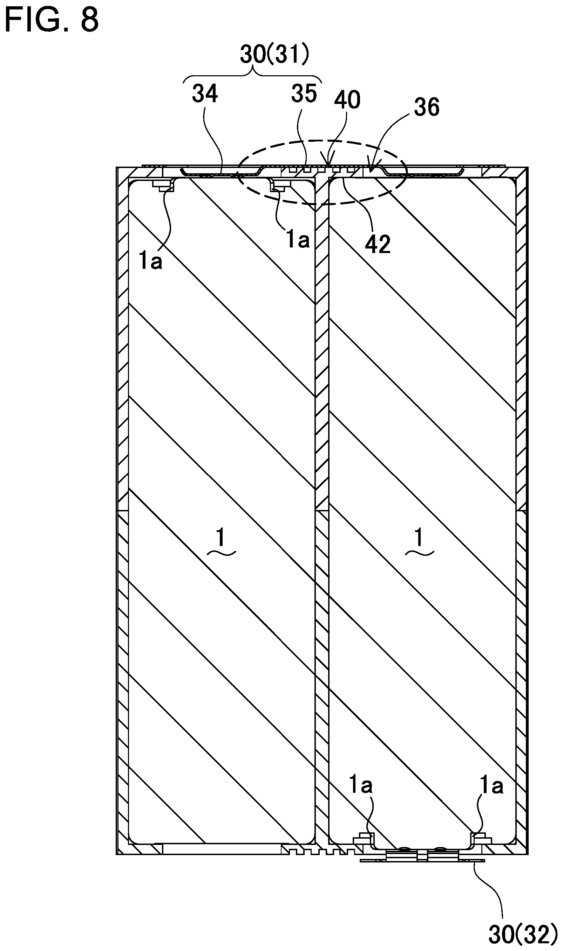

FIGs. 1 to 8 illustrate a battery pack 100 according to Embodiment 1 of the present invention. In these figures, FIG. 1 is a perspective view of the battery pack 100 according to Embodiment 1 of the present invention. FIG. 2 is an exploded perspective view of the battery pack 100 of FIG. 1. FIG. 3 is a perspective view of a battery module 2 of FIG. 2. FIG. 4 is a perspective view of the battery module 2 of FIG. 3, viewed from the back. FIG. 5 is an exploded perspective view of the battery module 2 of FIG. 3 with a lead plate 30 detached. FIG. 6 is an exploded perspective view of the battery module 2 of FIG. 4 with the lead plate 30 detached. FIG. 7 is an exploded perspective view of the battery module of FIG. 5 with a battery holder 20 detached. FIG. 8 is a cross-sectional view of the battery module 2 of FIG. 3 taken along the line VIII-VIII. The battery pack 100 shown in these figures has an outer case 10 and the battery module 2. The battery module 2 includes one or more secondary battery cells 1.

### (Outer Case 10)

The outer case 10 stores the battery module 2 including one or more secondary battery cells 1, and a circuit board 3. As shown in FIGs. 1, 2, etc., the appearance of the outer case 10 in plan view is a rectangular box extending in one direction. The outer case 10 in the form of a box has a first face and a second face that intersects the first face. In the example in FIG. 1, the top surface in the figure is the first face, and the side surface that extends along the longitudinal direction is the second face. As shown in FIG. 2, etc., a storage space for the battery module 2 and the circuit board 3 is provided inside the outer case 10.

The outer case 10 is divided into two parts, i.e., an upper case 11 and a lower case 12, for example, as shown in FIG. 2. In the upper case 11 and the lower case 12 thus divided, each corner is secured by screwing, fitting, adhesion, ultrasonic welding, or the like. The outer case 10 is not limited to the above configuration. For example, the outer case 10 can be divided into a bottomed tube with one side opened and a lid that closes the opening. The outer case 10 can also be divided into three or more parts.

### (Battery Module 2)

FIGs. 3 to 7 illustrate the battery module 2. As shown in these figures, the battery module 2 includes the plurality of secondary battery cells 1, the battery holder 20 for storing the secondary battery cells 1, and the lead plate 30.

### (Battery Holder 20)

The battery holder 20 includes a plurality of storage tubes 24 for separately storing individual secondary battery cells 1. In the example shown in FIG. 7, the battery holder 20 is divided into two parts, i.e., a first holder 21 and a second holder 22, in the longitudinal direction of the cylindrical secondary battery cell 1, and the secondary battery cell 1 is stored in the storage tube 24 from each end face in the longitudinal direction. Further, each end face of the storage tube 24 has an opening 23 through which the end face of the secondary battery cell 1 is exposed. The battery holder 20 can be formed of a resin with an excellent insulation property, such as polycarbonate.

### (Secondary Battery Cell 1)

Each of the one or more secondary battery cells 1 may be one having a square or cylindrical outer can. In the examples shown in FIGs. 7 and 8, four cylindrical secondary battery cells 1 are disposed by stacking two cells on the other two, forming a two-tier lamination. In addition, the secondary battery cells 1 are connected one another in a 2-series 2-parallel configuration. The number of the secondary battery cells, their arrangement, the number of series and parallel connections, and the like are not limited to this example, and any number and arrangement can be used as appropriate. Each secondary battery cell 1 has positive and negative electrodes. The positive or negative electrode is preferably provided on one of the end faces of the secondary battery cell 1. Suitable examples of batteries to be used for the secondary battery cell 1 include known secondary batteries, such as lithium-ion secondary batteries, nickel-metal hydride batteries, or nickel-cadmium batteries.

The outer can of the secondary battery cell 1 has a gas discharge port 1a, as shown in FIGs. 8, 12, 14, etc. The gas discharge port 1a opens in response to an increase in the internal pressure of the outer can, thus releasing the internal gas to the outside. Such a gas discharge port 1a can be formed of, for example, a safety valve or a sealing body provided with a slit for opening the open end.

### (Lead Plate 30)

The lead plate 30 is disposed on the side surface of the battery holder 20. The lead plate 30 connects the electrodes on the end faces of the secondary battery cells 1 to each other, thereby connecting the plurality of secondary battery cells 1 in series or in parallel. In the examples shown in FIGs. 3 to 7, etc., the secondary battery cells 1 are connected one another in a 2-series 2-parallel configuration, with a first lead plate 31 coupling the end faces of the four secondary battery cells 1 and a second lead plate 32 coupling the end faces of the two secondary battery cells 1. The number of the secondary battery cells, their arrangement, the number of series and parallel connections, and the like are not limited to this example, and any number and arrangement can be used as appropriate. Each of these lead plates 30 is formed of a metal plate with excellent electrical conductivity, such as a nickel plate. An insulating plate may be provided on each end face of the lead plate 30, if necessary. The insulating plate is formed of a material with excellent insulating property, such as paper or mica.

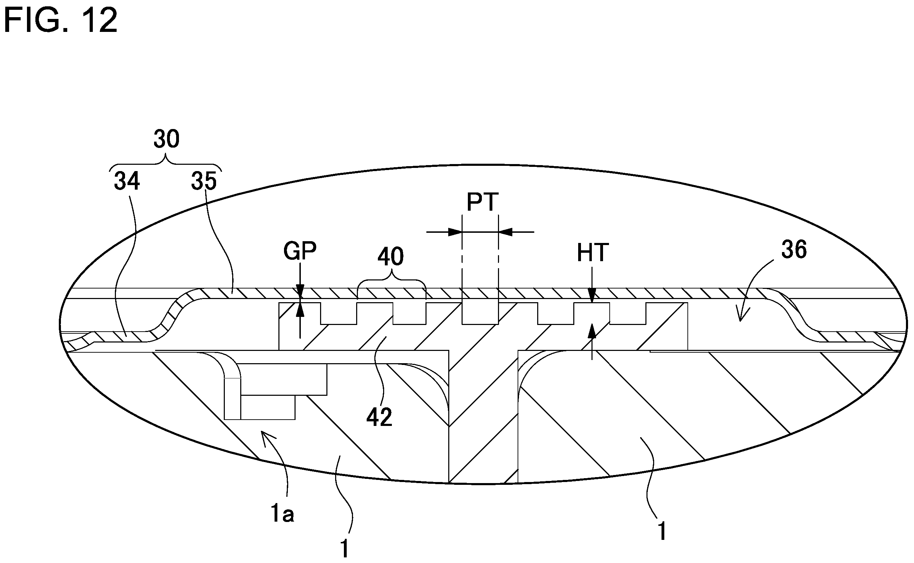

As shown in FIGs. 3 to 7, each lead plate 30 has a pair of joint pieces 34 and a flat portion 35 having the pair of joint pieces 34 on both sides. The joint pieces 34 join to the respective end faces of the adjacent secondary battery cells 1. The pair of joint pieces 34 is bent on both sides of the flat portion 35. Further, as shown in FIGs. 8 and 12, the main face of the flat portion 35 is separated from the face where the pair of joint pieces 34 are provided, thereby forming a first space 36 on the back side of the flat portion 35.

Further, a circuit board 3 is placed on the upper face of the battery holder 20, as shown in the exploded perspective view in FIG. 2. The battery holder 20 holds the secondary battery cells 1 and the circuit board 3. The battery module 2 is connected to the circuit board 3 via the lead plate 30. The upper face of the battery holder 20 constituting the battery module 2 has a mounting face on which the circuit board 3 is placed.

### (Circuit Board 3)

The battery module 2 is connected to the circuit board 3 via the lead plate 30. The circuit board 3 includes, for example, a charging/discharging circuit that performs charging and discharging of the secondary battery cells 1, and a protection circuit that monitors the voltage and temperature of the secondary battery cells 1 and shuts off the current if abnormality occurs. The circuit board 3 includes a glass epoxy substrate or a similar substrate.

### (Baffle Plate 40)

The battery pack 100 also includes a baffle plate 40 with protrusions and depressions in which a plurality of protrusions and depressions are alternately disposed. The baffle plate 40 is disposed between the end faces of adjacent secondary battery cells 1. The baffle plate 40 is provided on at least one of a face of the battery holder 20 opposite the lead plate 30 and a face of the lead plate 30 opposite the battery holder 20. The baffle plate 40 generates a pressure difference in the gas discharged from the secondary battery cell as the gas flows between the battery holder 20 and the lead plate 30. With this configuration, even if high-temperature and high-pressure gas is unexpectedly discharged from the gas discharge port 1a of one of the secondary battery cells, it is possible to reduce the pressure of the gas by the baffle plate 40, thereby preventing or suppressing the event that the gas reflected by the lead plate 30 coupling end faces of adjacent secondary battery cells propagates to the end face of the adjacent secondary battery cell and causes heating of this secondary battery cell. This contributes to improved safety.

Specifically, the present inventor found that, in a configuration in which electrical connection of secondary battery cells is established using a lead plate, the lead plate may cause propagation of high-temperature and high-pressure gas. More specifically, in a configuration in which electrical connection of secondary battery cells 901 is established using the lead plate 930, as in the battery pack 900 according to the comparative example shown in FIGs. 9 and 10, a plurality of secondary battery cells 901 are held by a battery holder 920 with their end faces aligned and the end faces of adjacent secondary battery cells 901 are exposed and welded together by the lead plate 930. In this configuration, the lead plate 930 in the form of a flat plate is welded over the end face of each secondary battery cell 901.

On the other hand, each secondary battery cell 901 has a gas discharge port 901a, such as a safety valve, which opens in the event that the inside of the outer can is highly pressurized and discharges the high-temperature and high-pressure gas inside of the outer can to the outside. When the high-temperature and high-pressure gas is discharged from the gas discharge port 901a, the gas needs to be promptly discharged to the outside of the battery pack to prevent adverse effects on other normal secondary battery cells. The gas discharge port 901a is generally provided at an end face on the positive electrode side. Accordingly, the end face of the positive electrode side is covered by the lead plate 930, as shown in the cross-sectional view in FIG. 10.

It has been found through tests conducted by the present inventor that, in this state, if the safety valve of the gas discharge port 901a of one of the secondary battery cells 901 unexpectedly opens, and high-temperature and high-pressure gas is ejected from the secondary battery cell, as shown in the schematic cross-sectional view in FIG. 11, the high-temperature and high-pressure gas discharged from the secondary battery cell 901A may be reflected upon hitting the back side of the lead plate 930 and may possibly impinge on an end face of the adjacent secondary battery cell 901B. This condition in which the end face of the normal secondary battery cell 901B is exposed to the high-temperature and high-pressure gas is considered abnormal, posing a risk of the abnormal secondary battery cell further propagating to other cells.

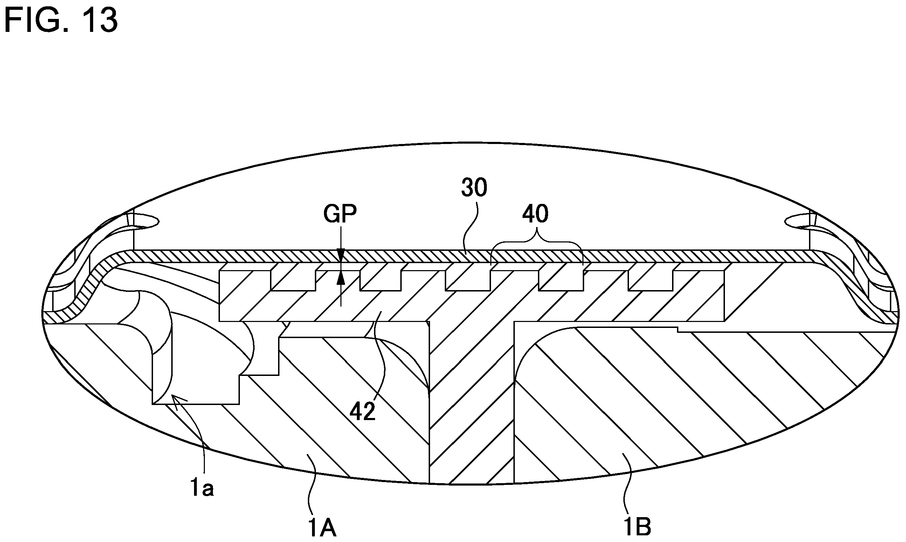

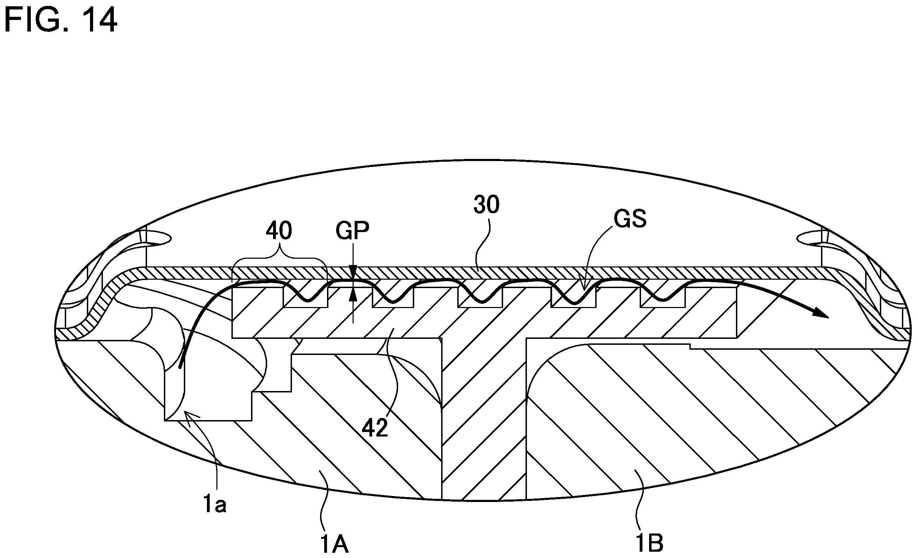

In view of this problem, in the battery pack 100 according to Embodiment 1, the plurality of protrusions and depressions, which constitute the baffle plate 40, are disposed alternately between the end faces of adjacent secondary battery cells 1, as shown in the cross-sectional views in FIGs. 8 and 12. Further, the upper face of the baffle plate 40 has a gap GP between itself and the lower face of the lead plate 30, as shown in FIGs. 12 and 13. With this configuration, even if high-pressure gas is discharged from the gas discharge port 1a of one of the secondary battery cells (in FIG. 14, the secondary battery cell 1A on the left), as indicated by the bold arrow in the enlarged cross-sectional view in FIG. 14, the gas that hits and is reflected by the lead plate 30 does not directly reach the adjacent secondary battery cell (in FIG. 14, the secondary battery cell 1B on the right) due to the presence of the baffle plate 40, instead, the gas first passes through a plurality of gaps GP formed between the upper face of the baffle plate 40 and the lower face of the lead plate 30. By thus reducing the gas pressure using the baffle plate 40, it is possible to improve safety. In addition, by diffusing the gas by the baffle plate 40, the mass flow rate of the gas moving toward the adjacent secondary battery cell can be reduced, thereby improving safety.

According to a study by the present inventor, when the high-pressure gas flows into the gap GP at the right end, the static pressure is converted to dynamic pressure as the gas approaches to the gap GP. After the gas passes through the gap GP, the pressure is recovered as the flow path expands and dynamic pressure is converted to static pressure. However, the gas flow does not follow the form of the flow path, thus causing flow separation and pressure loss. This is repeated due to the provision of the plurality of alternately disposed protrusions and depressions of the baffle plate 40, and the pressure difference between the inlet and outlet of the gap GP is reduced, exhibiting an effect of decreasing the gas pressure.

In the examples shown in FIG. 12, etc., the plurality of protrusions and depressions of the baffle plate 40 are parallel to each other. Also, a gas retention space GP is formed in the depression of the baffle plate 40. With this configuration, the following effect can be expected: the high-temperature and high-pressure gas discharged from the gas discharge port 1a stays in the gas retention space GP formed between the baffle plates 40, and, each time the gas moves forward beyond the baffle plates 40, a pressure loss is generated, which reduces the pressure of the gas by the time the gas reaches the adjacent secondary battery cell 1, thereby reducing the risk of thermal propagation.

The baffle plate 40 is provided on a base plate 42. In the examples in FIGs. 5, 8, etc., the base plate 42 is an end face of the battery holder 30. In FIG. 14, etc., the end face of each baffle plate 40 is separated from the rear side of the lead plate 30 to form the gap GP. Each gap GP is shorter than the height of the baffle plate 40. With this configuration, the high-temperature and high-pressure gas discharged from the gas discharge port 1a passes through the narrow gap GP to thereby generate a pressure loss; further, the gas moves forward while repeatedly moving up and down as it passes through the gap GP, descends into the gas retention space GP, then passes through an adjacent gap GP, and descends into an adjacent gas retention space GP. In this manner, the pressure of the gas can be decreased with the movement of the gas.

As mentioned above, each lead plate 30 forms a first space 36 on the back side of the flat portion 35. The baffle plate 40 is disposed in this first space 36. With this configuration, the gas reflected by the back of the flat portion 35 of the lead plate 30 in the first space 36 is guided into the gas retention space GP between the flat portion 35 and the baffle plate 40 and propagates by passing beyond the plurality of gas retention spaces GP, thereby reducing the gas pressure and mass flow rate. As a result, direct exposure of the high-temperature and high-pressure gas to the adjacent secondary battery cell 1 can be prevented or suppressed to enhance safety. It is desirable that the gas retention space (PT×HT) have a size with which the gas passing through the gap GP can form a vortex. This allows pressure reduction to take effect by a friction loss due to the vortex, in addition to a separation loss due to the rapid expansion of the flow path. It is preferable to provide a large pitch PT between the protrusions of the baffle plate 40 and a large height HP.

The lead plate 30 also couples the secondary battery cells aligned along the first direction. In contrast, the protrusions and depressions of the baffle plate 40 extend along a second direction, which intersects the first direction. When the high-temperature and high-pressure gas discharged from the gas discharge port 1a of one of secondary battery cells 1 is directed to an end face of the adjacent secondary battery cell, the movement of the gas is inhibited by the protrusions and depressions of the baffle plate 40 oriented to intersect the moving direction of the gas, thereby efficiently exerting a pressure reduction effect. In other words, the protrusions and depressions of the baffle plate 40 are formed to intersect the direction in which the lead plate 30 extends so as to allow the lead plate 30 to connect adjacent secondary battery cells.

Further, the protrusions and depressions of the baffle plates 40 are continuously formed to the side edges of the first and second holders 21 and 22 in the direction of the electrode end face of the secondary battery cell. Therefore, the gas is made to head for the sides of the first holder 21 and the second holder 22 in the longitudinal direction of the secondary battery cell by the baffle plate 40, and is routed to the depression formed between the two secondary battery cells along the cylindrical secondary battery cell side profile on each side in the longitudinal direction of the secondary battery cells of the first holder 21 and the second holder 22. Therefore, due to the presence of the baffle plate 40, the mass flow rate of the gas heading for the adjacent secondary battery cell is reduced, thereby enhancing the effect of preventing or suppressing direct exposure of the high-temperature and high-pressure gas to the adjacent secondary battery cell 1.

For example, as shown in FIGs. 3, 5, and 7, in the examples in which two secondary battery cells 1 are stacked over two others, i.e., in two-tier, these secondary battery cells 1 are adjacent to each other both in the vertical and horizontal directions. Therefore, the first lead plate 31 coupling these cells is formed as a flat plate that is nearly rectangular extending in the vertical and horizontal directions. Accordingly, the baffle plate 40 is formed in a cross shape extending in the vertical and horizontal directions. In contrast, as shown in FIGs. 4 and 6, only the baffle plate 40 extending in the longitudinal direction shown in FIG. 6 is required for the second lead plate 32 coupling the left and right secondary battery cells 1. In the examples shown in FIGs. 3 to 7, the first and second holders 21 and 22 have the same shape, therefore, in these examples, the first and second holders 21 and 22 each have the baffle plate 40 in four positions in a cross shape. The second holder may have a baffle plate only in the upper center.

### [Embodiments 2 to 5]

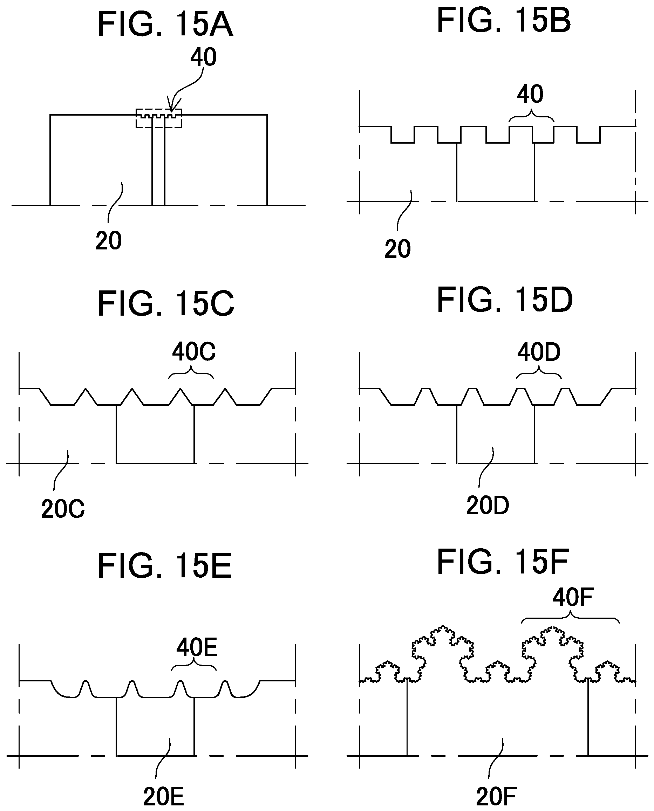

The cross-sectional shape of the protrusions and depressions of the baffle plate 40 may be rectangular as shown in FIGs. 15A and 15B, or they may have other shapes. For example, FIG. 15C shows a battery holder 20C as a battery pack according to Embodiment 2. The battery holder 20C has a baffle plate 40C with protrusions and depressions having triangular cross-sectional shape. Further, FIG. 15D shows a battery holder 20D as a battery pack according to Embodiment 3. The battery holder 20D has a baffle plate 40D with protrusions and depressions having trapezoidal cross-sectional shape. In addition to these shapes, the protrusions and depressions in the cross section of the baffle plate may have any polygonal form. The protrusions and depressions in the cross section of the baffle plate are not limited to polygonal shapes, and they may be formed of curved surfaces. For example, FIG. 15E shows a battery holder 20E as a battery pack according to Embodiment 4. The battery holder 20E has a baffle plate 40E with protrusions and depressions having a cross-sectional shape of beveled-triangular, i.e., curved surface. Further, FIG. 15F shows a battery holder 20F as a battery pack according to Embodiment 5. The battery holder 20F has a baffle plate 40F with protrusions and depressions having a fractal cross-sectional shape.

Although the above examples describe cases in which the baffle plate 40 is formed on an end face of the battery holder 20, the present disclosure is not limited to this configuration, and the baffle plate may be provided in a different member. For example, the baffle plate may be provided in a separator or spacer that insulates square secondary battery cells from each other, or a plurality of baffle plates may be formed on a base plate that is made of a different member than these members.

### [Embodiments 6 and 7]

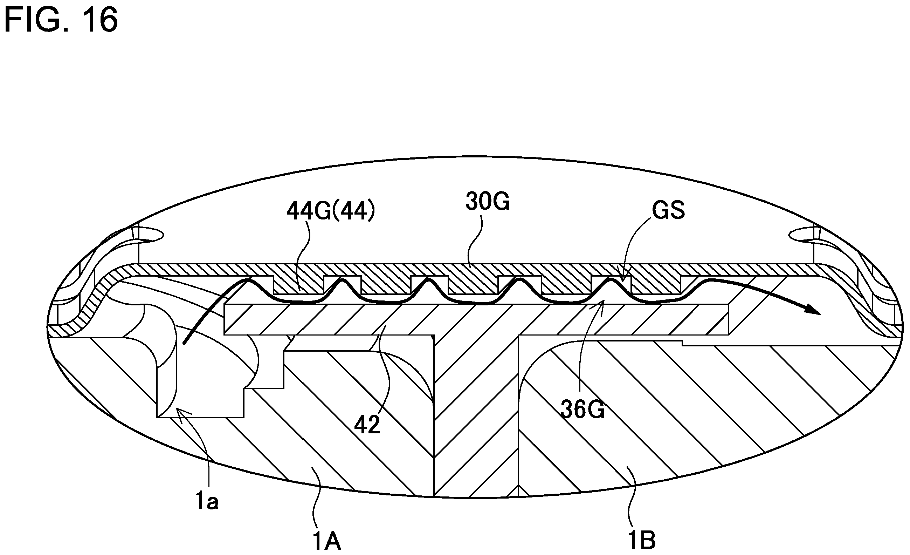

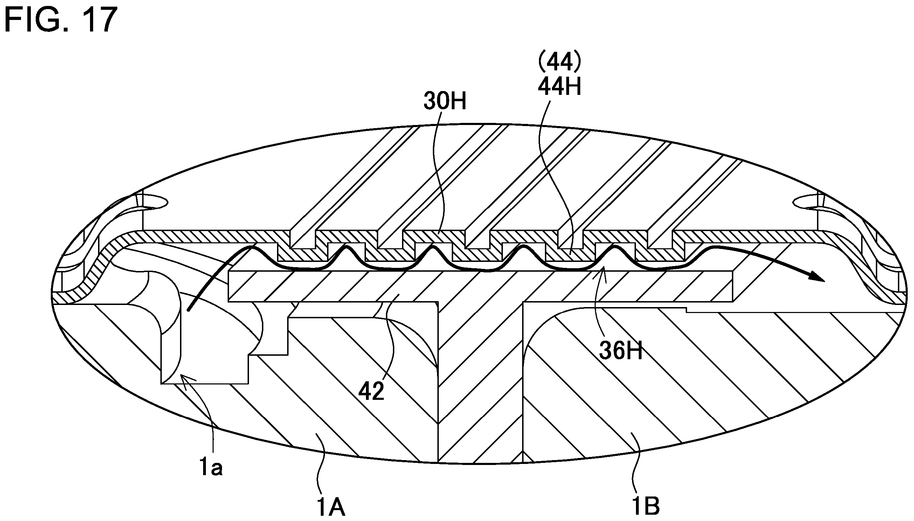

The baffle plate may also be provided on the lead plate. The cross-sectional views in FIGs. 16 and 17 illustrate such examples as battery packs according to Embodiments 6 and 7. In these figures, the same members as those described above in Embodiment 1, etc. are given the same reference numbers and detailed descriptions are omitted as appropriate. The lead plates 30G and 30H shown in FIGs. 16 and 17 respectively have second baffle plates 44G and 44H that are protruding to the first spaces 36G and 36H on their back side. The second baffle plate 44 may be formed on the lead plate 30 by welding, etc.; however, one preferable form is the second baffle plate 44G, which is formed on the lead plate 30 by integral molding, as in the battery pack according to Embodiment 6 shown in FIG. 16. Another preferable form may be the second baffle plate 44H, which is formed by, for example, press working, as in the battery pack according to Embodiment 7 shown in FIG. 17.

### [Embodiment 8]

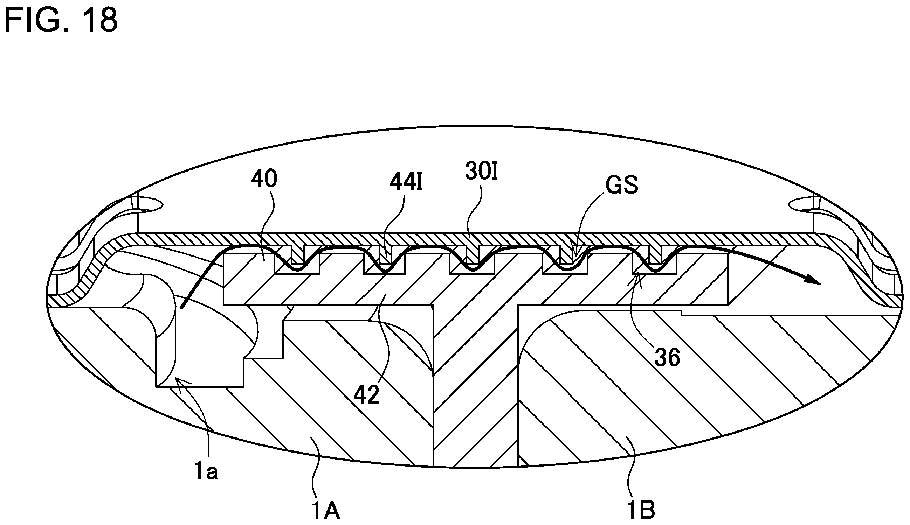

In addition to providing the second baffle plate in the lead plate instead of providing the baffle plate in the battery holder, it is also possible to provide the second baffle plate in the lead plate in addition to the baffle plate in the battery holder. The cross-sectional view in FIG. 18 illustrates such an example as a battery pack according to Embodiment 8. Again, in these figures, the same members as those described above in Embodiment 1, etc. are given the same reference numbers and detailed descriptions are omitted as appropriate. A lead plate 301 shown in FIG. 18 has a plurality of ridges 441 on its rear side. Each ridge 441 is interposed in each of the plurality of depressions in the baffle plate 40. With this configuration, the gas discharge path is formed in a zigzag shape with the baffle plate 40 and the ridges 441. This further enhances the effect of decreasing the pressure with the movement of the gas.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a casing of an electrical device. In the present disclosure, a battery pack simply refers to those in which, at least, secondary battery cells are stored in a case. Therefore, a configuration with built-in secondary battery cells for driving an electrical device stored in a casing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present invention is suitable for, for example, self-propelled robots for home delivery, electric carts for home delivery and golf courses, electric scooters, construction machinery, as well as a power source for driving vehicles such as hybrid and electric vehicles. In addition, the battery pack according to the present invention can suitably be used as a power source for driving electric assist bicycles, a power source for portable electrical devices such as radios, electric cleaners, and power tools, as well as stationary energy storage applications such as a backup power source for servers or a power supply for households, business establishments, and factories.

### REFERENCE SIGNS LIST

100 ... battery pack
1, 1A, 1B ... secondary battery cell; 1a ... gas discharge port
2 ... battery module
3 ... circuit board
10 ... outer case
11 ... upper case
12 ... lower case
20, 20C, 20D, 20E, 20F ... battery holder
21 ... first holder
22 ... second holder
23 ... opening
24 ... storage tube
30, 30G, 30H, 30I ... lead plate
31 ... first lead plate
32 ... second lead plate
34 ... joint piece
35 ... flat portion
36 ... first space
40, 40C, 40D, 40E, 40F... baffle plate
42 ... base plate
44, 44G, 44H ... second baffle plate
441 ... ridge
900 ... battery pack
901, 901A, 901B ... secondary battery cell; 901a ... gas discharge port
920 ... battery holder
GP ... gap
GP ... gas retention space
PT ... pitch between baffle plates
HT ... height of baffle plate

## Claims

1. A battery pack, comprising:
a plurality of secondary battery cells, each of which has a gas discharge port on an end face;
a battery holder that holds the plurality of secondary battery cells; and
one or more lead plates that couple end faces of adjacent secondary battery cells among the plurality of secondary battery cells,
the battery pack further comprising:
a baffle plate having a plurality of protrusions and depressions that generate a pressure difference in gas discharged from the secondary battery cells, the plurality of protrusions and depressions being provided between the end faces of the adjacent secondary battery cells by being disposed on at least one of a face of the battery holder opposite the lead plate and a face of the lead plate opposite the battery holder.

2. The battery pack according to claim 1, wherein
the protrusions and depressions of the baffle plate are provided in parallel to each other, and
a gas retention space is provided in a depression of the protrusions and depressions.

3. The battery pack according to claim 1, wherein
the baffle plate is provided on a base plate of the battery holder and an end face of each baffle plate is separated from a rear side of the lead plate to provide a gap, and
the gap is narrower than a height of the baffle plate.

4. The battery pack according to claim 1, wherein
the lead plate comprises:
a pair of joint pieces that joins to each end face of the adjacent secondary battery cells; and
a flat portion having the pair of joint pieces on both sides,
the pair of joint pieces on both sides of the flat portion being bent so that a main face of the flat portion is separated from a face where the pair of joint pieces is provided to form a first space on a back side of the flat portion, and
the baffle plate being disposed in the first space.

5. The battery pack according to claim 1, wherein
the lead plate has one or more ridges on a rear side, and
each ridge is interposed in a depression of the baffle plate.

6. The battery pack according to any one of claims 1 to 5, wherein
the lead plate couples secondary battery cells aligned along a first direction, and
the protrusions and depressions of the baffle plate extend along a second direction that intersects the first direction.

7. The battery pack according to any one of claims 1 to 5, wherein each of the secondary battery cells has a cylindrical outer can.
